Europäisches Patentamt

European Patent Office

Office européen des brevets

(11) Veröffentlichungsnummer : **0 011 265**
**B1**

(12) **EUROPÄISCHE PATENTSCHRIFT**

(45) Veröffentlichungstag der Patentschrift :
26.01.83

(51) Int. Cl.³ : **H 01 F   1/11, C 04 B 35/26**

(21) Anmeldenummer : 79104441.5

(22) Anmeldetag : 12.11.79

(54) Verfahren zur Herstellung von Hartferritpulver.

(30) Priorität : 18.11.78 DE 2850108
26.07.79 DE 2930267

(43) Veröffentlichungstag der Anmeldung :
28.05.80 Patentblatt 80/11

(45) Bekanntmachung des Hinweises auf die Patenterteilung : 26.01.83 Patentblatt 83/04

(84) Benannte Vertragsstaaten :
AT BE CH DE FR GB LU NL SE

(56) Entgegenhaltungen :
DE A 2 736 882
FR A 2 024 178
GB A 888 688
US A 4 120 806

(73) Patentinhaber : DORNIER SYSTEM GmbH
Postfach 1360
D-7990 Friedrichshafen (DE)

(72) Erfinder : Schmidberger, Rainer, Dr. Dipl.-Phys.
Im Bild 6
D-7775 Bermatingen (DE)
Erfinder : Franke, Hilmar, Dr. Phys.
Markdorfer Strasse 173
D-7990 Friedrichshafen 24 (DE)

(74) Vertreter : Landsmann, Ralf, Dipl.-Ing.
Kleeweg 3
D-7990 Friedrichshafen 1 (DE)

Jouve, 18, rue St-Denis, 75001 Paris, France

## Verfahren zur Herstellung von Hartferritpulver

Die Erfindung betrifft ein Verfahren zur Herstellung eines Hartferritpulvers der Zusammensetzung BaO · 6 Fe$_2$O$_3$, wobei es bekannt ist, eine gemeinsame Lösung von Eisensalzen und Bariumsalzen in Wasser in einem Reaktionsgefäss bei hohen Temperaturen einer Wärmebehandlung zu unterziehen.

Hartferrite sind oxidische Dauermagnetwerkstoffe mit hoher Koerzitivfeldstärke, d.h. Magnetwerkstoffe, die schwer entmagnetisierbar sind. Ihr Einsatz erfolgt u.a. in Gleichstrommotoren.

Hartferrite haben üblicherweise folgende Zusammensetzung : BaO · 6 Fe$_2$O$_3$, wobei anstatt Ba auch Sr oder Pb verwendet werden und das Verhältnis der Oxidanteile auch von 6 abweichen kann (z.B. 5,5 ... bis ... 6,5). Hinzu kommen Zusätze zur Verbesserung der Sinterfähigkeit, Verbesserung der Gefügestruktur, Erhöhung der Koerzitivfeldstärke und/oder Remanenz.

Die Koerzitivfeldstärke von Hartferritpulver wird wesentlich durch die Korngrösse der einkristallinen Bereiche (Primärkörner) in den Partikeln bestimmt, da die Entstehung von Blochwänden unmittelbar mit der Partikelgrösse über die Zahl der als mögliche Keimbildner zur Blochwandbildung dienenden Gitterdefekte zusammenhängt. Je kleiner die einkristallinen Bereiche sind, umso höher ist die auftretende Koerzitivfeldstärke, sofern die Grenze zum superparamagnetischen Teilchen nicht unterschritten wird, bei dem die Ummagnetisierung durch thermische Aktivierung erfolgt.

Aus folgenden Literaturstellen sind Verfahren zur Herstellung von Ferriten bekannt :

1. CERAMIC BULLETIN Vol. 47 No. 2 (1968) « Magnetic Ceramics — A review and status report » Seiten 186 bis 194.

2. Preparation of Ferrites by the Atomizing Burner Technique, Lincoln Laboratory, Massachusetts Institute of Technology.

3. T. Akashi, T. Tsuji, Y. Onoda Sintering of Ferrite Powder Prepared by a New Spray-Roasting Technique.

4. JOURNAL DE PHYSIQUE, April 1977 Fast Reaction Sintering Process for the Production of Ferrites.

5. DE-OS 24 03 900.

6. Berichte der Deutschen Keramischen Gesellschaft 55 (1978) No. 4, Seiten 194 bis 197 : « Synthetische keramische Rohstoffe ».

7. GB-PS 888 688.

8. US-PS 3 378 335.

9. FR-A-2 024 178.

In Literaturstelle 1 wird auf Seite 190 die einleitend angegebene Zusammensetzung von Hartferriten erwähnt.

Literaturstelle 2 betrifft Weichferrite. Eine Lösung der Metallnitrate in Alkohol wird verdüst oder mit Sauerstoff verbrannt. Dabei bildet sich ein Pulver mit grosser Homogenität, das in einem Zyklon abgeschieden wird.

Literaturstelle 3 betrifft ein sogenanntes « Spray-Roasting » — Verfahren zur Herstellung von Weichferriten. Eine Lösung der metallischen Komponenten in HNO$_3$ wird in einem Sprühtrockner bei Temperaturen zwischen 350° und 400 °C zersetzt. Da hierbei keine Spinellstruktur entsteht, kann das verwendete Pulver nicht zur Herstellung gerichteter Magnete verwendet werden. Der Volumenschwund beim Sintern ist sehr gross, da im Pulver unzersetzte Nitrate enthalten sind.

Aus Literaturstelle 4 ist es bekannt, Ferrite aus einer Suspension der beteiligten Metalloxide, die in ein heisses Reaktionsrohr versprüht wird, herzustellen. Dabei bildet sich durch Festkörperreaktion das Mischoxid. Die Verwendung von Suspensionen führt zu einer geringen Homogenität und zu aufwendigen Verfahrensschritten bei Durchmischung und Aufbereitung der Pulver. Ein ähnliches Verfahren ist in Literaturstelle 5 beschrieben, wobei hier zusätzliche Bestandteile sehr homogen in Form wasserlöslicher Salze zugegeben werden.

Aus Literaturstelle 6 sind verschiedene Pulverpräparationsverfahren, z.B. Sprühröstverfahren, bekannt. Die Versprühung erfolgt dabei in Brennern. Ferner ist dort die Sprühtrocknung von Lösungen bei niedriger Temperatur erwähnt, die, wie in Literaturstelle 3 beschrieben ist, zur Herstellung von innigen Salzmischungen geeignet ist.

Aus der GB-PS 888 688 (Literaturstelle 7) ist es bekannt, eine gemeinsame Lösung von Eisen- und Bariumsalzen in Wasser bei hohen Temperaturen in eine Flamme einzusprühen und daraus Bariumferritpulver herzustellen, das durch Abschrecken eine amorphe Struktur aufweist und damit weichmagnetische Eigenschaften hat. Aus diesen weichmagnetischen Pulvern kann durch eine anschliessende Wärmebehandlung die kristalline und damit hartmagnetische Ferritstruktur erzeugt werden. Da diese Wärmebehandlung an Pulverschüttungen durchgeführt werden muss, besteht die Gefahr des Zusammensinterns der einzelnen Pulverpartikel, so dass kein verarbeitungsfähiges (pressbares und im Magnetfeld ausrichtbares) Pulver mehr vorliegt.

US-PS 3 378 335 (Literaturstelle 8) beschreibt ebenfalls die Verwendung gemeinsamer Lösungen von Barium- und Eisensalzen, die durch Einsprühen in ein heisses Reaktionsgefäss thermisch zersetzt werden, wobei das entstehende Produkt jedoch nur zu etwa 50 % magnetische Eigenschaften besitzt. Dies ist auf die verwendeten Prozessparameter zurückzuführen. Das so hergestellte Pulver ist nicht zur Herstellung gerichteter Magnete zu verwenden. Auch durch Nachbehandlung lassen sich keine Magnete mit hoher Koerzitivfeldstärke und Sättigungsmagnetisierung herstellen.

In der Literaturstelle 9 (FR-A-2 024 178) werden Eisennitrat- und Strontiumnitrat-Lösungen gemischt als Ausgangslösung für das Einsprühen verwendet. Das erhaltene Pulver muss in einem zusätzlichen Verfahrensschritt kalziniert werden, um durchreagiertes Strontiumferritpulver zu erhalten. Neben dem sehr hohen Preis des Eisennitrats ist hierbei noch nachteilig, dass das erzeugte Pulver zwar eine hohe Sättigungsmagnetisierung besitzt, die gewünschte Koerzitivfeldstärke aber nicht erreicht wird.

Der Erfindung liegt die Aufgabe zugrunde, ein Verfahren zur Herstellung von Hartferritpulver für Hartferrite mit möglichst grosser Koerzitivfeldstärke und hoher Sättigungsmagnetisierung zu schaffen, das darüberhinaus eine hohe Sinteraktivität aufweist und zur Herstellung gerichteter (anisotroper) Magnete geeignet ist.

Diese Aufgabe wird erfindungsgemäss bei einem Hartferritpulver der Zusammensetzung $BaO \cdot 6 Fe_2O_3$ dadurch gelöst, dass eine 0,05 bis 0,3 molare wässrige Lösung bezogen auf das Endprodukt $BaFe_{12}O_{19}$, bei der Eisen in der Form von Eisen (II)-chlorid und Barium in der Form des Nitrates vorhanden ist, in ein Reaktionsgefäss eingesprüht wird, wobei die Tröpfchengrösse < 30 μm ist und die Partikel 2 bis 10 Sekunden einer Temperatur von 700 °C bis 900 °C ausgesetzt sind.

Ein wichtiges Merkmal des Verfahrens ist, dass während des gesamten Reaktionsablaufs « flüssige Lösung — festes Mischoxidpartikel » möglichst keine Entmischung der Einzelkomponenten erfolgen darf, d.h. die in der Lösung vorliegende homogene Verteilung der gelösten Substanzen soll während der gesamten Reaktion erhalten bleiben.

Dazu muss die Reaktion so rasch geführt werden (z.B. Verdampfen innerhalb 1/10 Sekunde), dass beim Verdampfen des Lösungsmittels ein möglichst geringes fraktioniertes Ausfällen von Einzelsalzen erfolgt, das zu einer lokalen Entmischung der Einzelkomponenten führt und es dürfen bei der weiteren Reaktion (Mischung von Metallsalzen geht über in Mischoxid) keine bei den Reaktionstemperaturen flüchtigen Verbindungen der Metalle entstehen. Die Salzmischung muss also im festen Zustand in das Mischoxid überführt werden. Bei der Herstellung von Hartferritpulver kann dies dadurch erreicht werden, dass als Ausgangssubstanz Eisen (II)-chlorid ($FeCl_2$) verwendet wird, das erst oberhalb von 670 °C sublimiert, während Eisen (III)-chlorid bei Temperaturen unterhalb von 300 °C verdampft.

Es wurde gefunden, dass bei ausschliesslicher Verwendung von $FeCl_2$ und Strontium- oder Bariumsalzen als Ausgangssubstanzen Hartferritpulver mit den gewünschten Eigenschaften entsteht. Bei Verwendung von $FeCl_3$ an Stelle von $FeCl_2$ bildet sich im wesentlichen eine Mischung von $Fe_2O_3$ und $BaO$ bzw. $SrO$, wobei das $Fe_2O_3$ in feinster Form anfällt, da es durch eine homogene Gasreaktion gebildet wurde. $FeCl_3$ oder eine Mischung von $FeCl_2$ und $FeCl_3$ sind somit zur Erzielung des erfindungsgemässen Hartferritpulvers ungeeignet.

Es wurde weiter herausgefunden, dass die Verwendung von Erdalkalichloriden als Ausgangssubstanz nicht vorteilhaft ist, da die Chloride des Bariums und des Strontiums so stabil sind, dass eine vollständige Durchreaktion zum Hexaferrit erst bei Pulvertemperaturen oberhalb von 1 000 °C erfolgt.

Das erfindungsgemässe Verfahren beruht darauf, Eisen ausschliesslich in Form von Eisen (II)-chlorid und Barium oder Strontium in Form des Nitrates einzusetzen. Beim Verdampfen des Lösungsmittels aus den Tröpfchen im Reaktor fällt dabei zunächst das schwerlösliche Erdalkalinitrat aus und dann das Eisenchlorid. Erdalkalinitrate sind bei sehr niedrigen Temperaturen in die Oxide umwandelbar, so dass die Durchreaktion zum Hexaferrit bei Pulvertemperaturen um 900 °C nahezu vollständig erfolgt.

Die Zerlegung der Partikel in Primärkörner geschieht beispielsweise durch einen kurzen Mahlvorgang, der nur dazu dient, die einzelnen Primärkörner zu separieren und damit im Magnetfeld ausrichtbar zu machen. Würde man stärker mahlen, so würde die Koerzitivfeldstärke aufgrund der zunehmenden Zahl der Gitterfehler in den Primärkörnern verringert werden. Bei den zum Stand der Technik gehörenden Herstellungsprozessen kann man kleine Primärkörner nur durch intensives Mahlen erzielen, wobei sich, wie erwähnt, die Koerzitivfeldstärke stark erniedrigt.

Weitere Ausgestaltungen der Erfindung sind zum Gegenstand von Unteransprüchen gemacht worden.

Das erfindungsgemäss hergestellte Ferritpulver besteht aus Einzelpartikeln mit Durchmessern von ca. 1-10 μm, die sich wiederum aus einkristallinen Bereichen (Primärkörner) zusammensetzen. Die hexagonale Ferritstruktur ist vollständig oder zumindest weitgehend (> 85 %) ausgebildet, so dass das Pulver die mit dieser Struktur zusammenhängenden hartmagnetischen Eigenschaften besitzt.

Die Sättigungsmagnetisierung des Pulvers hängt von dem Anteil an hexagonaler Ferritphase ab (Durchreaktion) und beträgt mindestens $6 mTg/cm^3$. Die Koerzitivfeldstärke $_jH_c$ beträgt ca. 400-500 kA/m und liegt damit weit über der konventioneller Pulver (< 200 kA/m).

Das erfindungsgemässe Pulver kann durch einen leichten Mahlprozess in seine einkristallinen Bereiche zerlegt werden und daraus können durch Pressen im äusseren Magnetfeld mit anschliessendem Sintern gerichtete Magnete hergestellt werden. Die Ausrichtbarkeit hängt von der Durchreaktion und Ausbildung der hexagonalen Ferritstruktur ab. Je höher der Anteil an kristalliner Phase ist, umso besser ist die Ausrichtbarkeit des Pulvers.

Amorphe oder nicht durchreagierte Ferritpulver, wie teilweise in der Literatur beschrieben, sind nicht zur Herstellung anisotroper Magnete geeignet.

Die hohe Koerzitivfeldstärke des erfindungsgemässen Materials beruht auf den geringen Abmessungen der in den Partikeln enthaltenen einkristallinen Bereiche (Primärkörner) sowie auf der geringen Zahl der darin enthaltenen Gitterdefekte und Leerstellen.

Die Herstellung von Magneten (isotrop oder anisotrop) aus dem erfindungsgemässen Pulver erfolgt durch Verdichten des Pulvers (Pressen) mit anschliessendem Sintern. Zur Erleichterung des Sinterns können Hilfsstoffe wie z.B. $SiO_2$ im Pulver enthalten sein. Auf diese Weise gelingt es, die notwendigen Sintertemperaturen zur Erzielung einer ausreichenden Dichte der Magnete ($\varphi > 4{,}8$ g/cm³) zu senken und damit das Entstehen von Sauerstoffleerstellen im Kristallgitter zu behindern und gleichzeitig ein starkes Kornwachstum, das zu verringerter Koerzitivfeldstärke führt, zu verhindern.

Andere Hilfsstoffe behindern das Kornwachstum oder dienen zur Erzielung eines gleichmässigen Gefüges (Verhinderung von Riesenkornwachstum).

Wieder andere Hilfsstoffe werden substitutionell in das Gitter eingebaut, wobei beispielsweise ein Teil der Eisenatome durch Aluminiumatome ersetzt wird. Derartige Substitutionen können eine Erhöhung der Koerzitivfeldstärke bewirken, wenn die Substituenten sehr homogen im Gitter verteilt sind.

Das erfindungsgemässe Verfahren zur Herstellung des Pulvers durch Zerstäuben einer gemeinsamen Lösung der beteiligten Substanzen in eine heisse Reaktionskammer erlaubt die exakte Kontrolle der Herstellungsbedingungen, so dass ausreichend gut durchreagiertes Pulver mit kristalliner Struktur entsteht, wobei die Grösse der in den einzelnen Partikeln enthaltenen einkristallinen Bereiche durch geeignete Wahl und Kontrolle von Reaktionstemperatur, Verweilzeit in der heissen Zone, Tröpfchengrösse und Konzentration der Lösung sehr klein gehalten werden kann. Daraus resultiert eine hohe Koerzitivfeldstärke des hergestellten Pulvers bei gleichzeitig guter Sinteraktivität.

Reaktionstemperatur und Verweilzeit in der Reaktionzone müssen so gewählt werden, dass eine möglichst vollständige Ferritmischkristallbildung erfolgt, ohne dass gleichzeitig die in den Pulverpartikeln vorliegenden Primärkörner durch zu hohe Reaktionstemperatur oder zu lange Verweilzeit auf Durchmesser oberhalb von 0,5 µm anwachsen.

Das beim erfindungsgemässen Verfahren entstehende Pulver mit Partikeln von 1-10 µm Durchmesser besteht vorwiegend aus hohlkugelförmigen Agglomeraten aus Primärkörnern, die mechanisch leicht in ihre Einzelbestandteile zu zerlegen sind.

Die Zerlegung in einzelne Primärkörner ist dann notwendig, wenn aus dem Pulver anisotrope Magnete durch Pressen im Magnetfeld mit anschliessendem Sintern hergestellt werden sollen. Die Ausrichtung der einkristallinen Bereiche ist aufgrund der magnetischen Kristallanisotropie der hexagonalen Ferritstruktur möglich.

Weitere Vorteile, Merkmale und Anwendungsmöglichkeiten der Erfindung ergeben sich aus den Figuren, die nachfolgend beschrieben sind. Es zeigen:

Figur 1 eine schematische Skizze eines zum Stand der Technik gehörenden Verfahrens zur Herstellung von Hartferriten;

Figur 2 eine Skizze des erfindungsgemässen Verfahrens zur Herstellung von Hartferriten;

Figur 3 eine Gegenüberstellung zum Vergleich der üblichen Herstellungsverfahren mit dem neuen Verfahren zur Herstellung von Hartferriten, und

Figur 4 die Sättigungsmagnetisierung verschiedener Hartferrite in Abhängigkeit vom Nitratgehalt der Lösung.

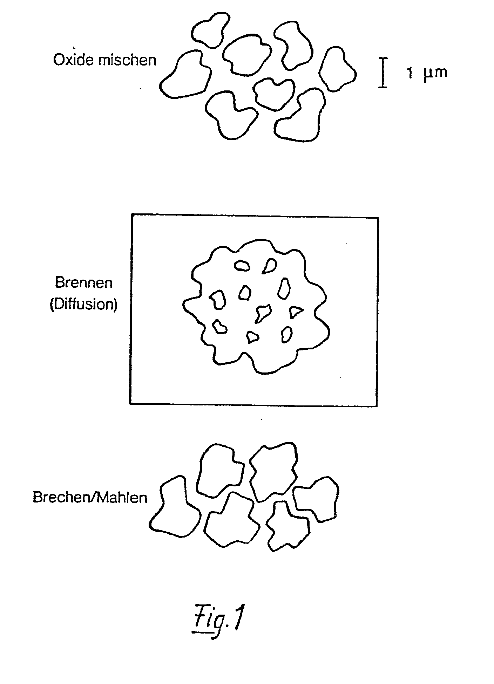

Fig. 1 zeigt ein übliches Verfahren zur Herstellung von Hartferriten, wobei aus einer $FeCl_2$-Lösung durch Sprühmösten ein $Fe_2O_3$-Pulver hergestellt wird. Dieses wird mit $Ba(NO_3)_2$ oder $Sr(NO_3)_2$, das ebenfalls in Pulverform vorliegt, gemischt. Dann wird die Mischung gebrannt, grob zerkleinert, feinst gemahlen, wobei das Barium-Ferrit-Pulver für die Herstellung magnetischer Werkstoffe gewonnen wird. Durch Pressen und Sintern werden aus dem Ausgangsmaterial Hartferrite hergestellt.

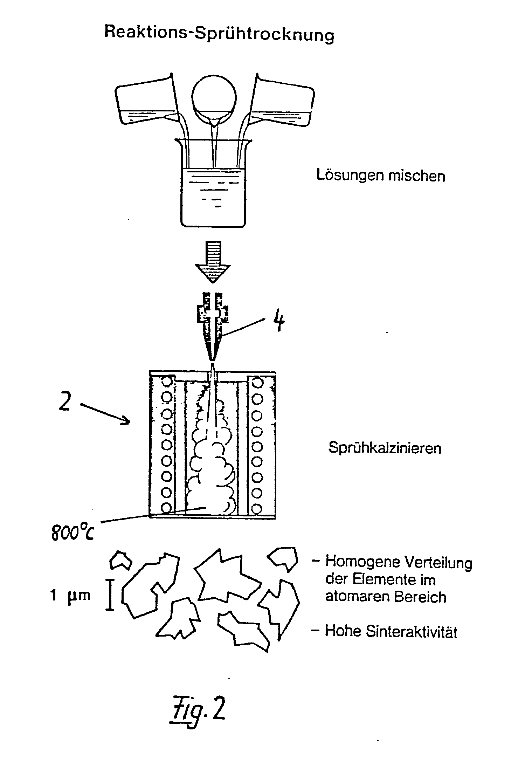

Das erfindungsgemässe Verfahren ist in Fig. 2 gezeigt. Hier wird einer Lösung aus $FeCl_2Ba(NO_3)_2$ zugesetzt und die gemeinsame Lösung 1 danach in ein Reaktionssprührohr 2 mittels einer Düse 4 eingesprüht, wobei im Reaktionsgefäss eine Temperatur von ca. 800 °C herrscht. Bei dieser Temperatur erfolgt eine nahezu vollständige Durchreaktion der Teilchen und es bilden sich Ferritmischkristalle mit homogener Verteilung der Elemente im atomaren Bereich, hoher Sinteraktivität, kleiner Abmessungen der Primärkörner und daraus resultierender hoher Koerzitivfeldstärke.

Einzelheiten des erfindungsgemässen Verfahrens werden nachfolgend aufgezeigt:

Herstellen der Lösung

Ausgangsmaterial sind feste Salze von Ba und Fe, Bariumnitrat und Eisen(II)-chlorid, wobei letzteres als Abfallstoff in Walzwerksprozessen anfällt. Diese Salze werden im Verhältnis der gewünschten Zusammensetzung in Wasser gelöst (bei Laborversuchen wurde entsalztes Wasser verwendet). Wegen der geringen Löslichkeit von $Ba(NO_3)_2$ oder $Sr(NO_3)_2$ in Wasser kann die Lösung in mit Wasser verdünnten Säuren vorgenommen werden, wie z.B. in $HNO_3$, HCl oder Essigsäure. Falls eine möglichst hohe Konzentration der Lösung erreicht werden soll, wird die Lösung erwärmt und während der nachfolgenden Verarbeitungsschritte auf erhöhter Temperatur (50-90 °C) gehalten. Gegebenenfalls werden Zuschlagstoffe ebenfalls in Form wasserlöslicher oder in verdünnten Säuren löslicher Salze zugegeben. Dieses Verfahren der Zusetzung von Hilfsstoffen ist insbesondere dann vorteilhaft, wenn der substitutionelle Einbau der Hilfsstoffe in das Kristallgitter des Endprodukts gewünscht wird. Sollen die Hilfsstoffe in Form von Ausscheidungen im Endprodukt vorliegen, so kann die Zugabe zur Lösung als Suspension vorteilhaft sein.

Anschliessend wird die gemeinsame Lösung gut durchgemischt und gegebenenfalls werden während der weiteren Verarbeitungsschritte suspendierte oder emulgierte Phasen z.B. durch Rühren homogenisiert.

Versprühen

Die Lösung wird nun einer Zerstäubervorrichtung zugeführt (z.B. pneumatische Düse, Piezoschwinger) und in Einzeltropfen < 30 μm zerlegt. Bei Verwendung einer pneumatischen Zweistoffdüse kann als Zerstäubergas Pressluft verwendet werden.

Reaktionsgefäss

Wie in Fig. 2 gezeigt, kann das Reaktionsgefäss 2 als zylinderförmiges temperaturbeständiges Rohr ausgebildet sein und aus Quarzgut bestehen. Das Reaktionsgefäss ist an seiner Mantelfläche mit einer Heizeinrichtung (Widerstandsheizung) versehen. Die Oberflächentemperatur des Rohres beträgt z.B. 1 200 °C bei einer beheizten Länge von ca. 1 m.

Trennung des Pulvers vom Gasstrom

Das am Ende des Reaktionsrohres austretende Pulver- und Gasgemisch wird gegebenenfalls unter Ansaugen von Zusatzluft durch einen Zentrifugalabscheider (nicht gezeigt) geleitet, wobei sich das Pulver vom Gasstrom trennt. Alternativ oder zusätzlich können Einrichtungen zur elektrischen, magnetischen oder Nassentstaubung vorhanden sein.

Mahlen

Zur Zerlegung der Pulverpartikel in einkristalline Primärkörner wird das Pulver in einer Mühle (z.B. Kugelmühle, Scheibenmühle oder Luftstrahlmühle) zwischen 20 min und 1 Stunde leicht gemahlen.

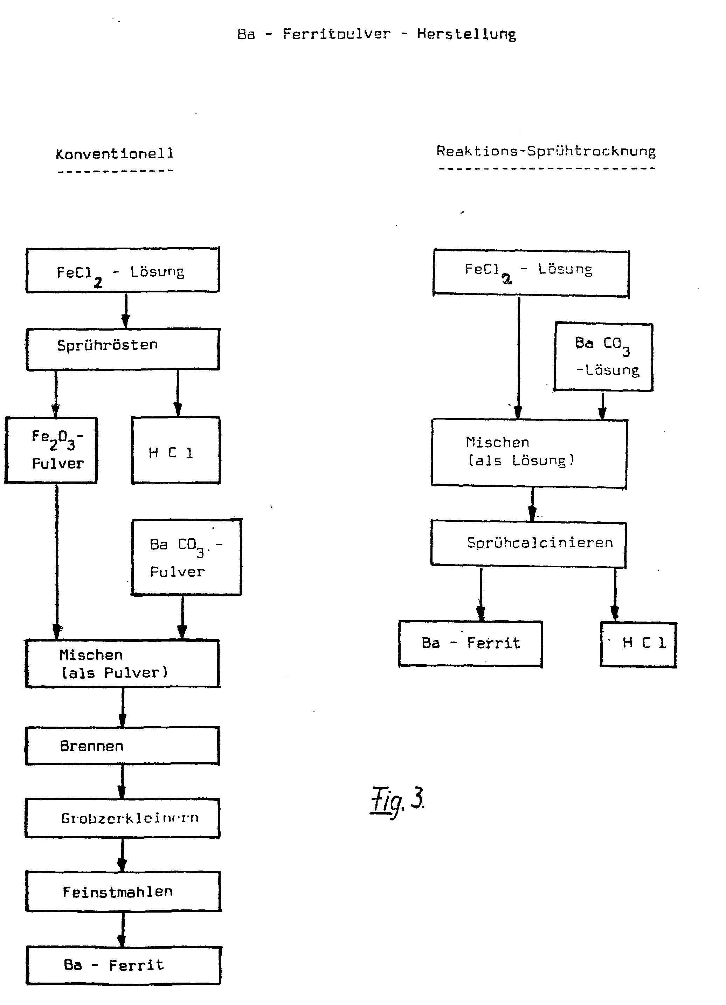

Fig. 3 zeigt einen Vergleich des bekannten Verfahrens mit dem erfindungsgemässen Verfahren. Dabei wird das zur Herstellung notwendige Eisenoxid beim konventionellen Verfahren durch eine Sprühröstprozess (nicht gezeigt in Fig. 1) aus einer Eisenchloridlösung gewonnen unter Rückgewinnung der eingesetzten Salzsäure. Dieser Verfahrensschritt wird in Stahlwalzwerken durchgeführt.

Bei Verwendung von Chloriden als Ausgangssubstanz ist es nicht vorteilhaft, Barium oder Strontium als Chloride zu verwenden. Die Erdalkalichloride sind so stabil, dass eine vollständige Durchreaktion zum Hexaferrit erst bei Pulvertemperaturen oberhalb von 1 000 °C erfolgt.

Das erfindungsgemässe Verfahren beruht vielmehr darauf, Eisen in Form von Eisen(II)-chlorid und Barium oder Strontium in Form des Nitrates einzusetzen. Beim Verdampfen des Lösungsmittels aus den Tröpfchen im Reaktor fällt dabei zunächst das schwerlösliche Erdalkalinitrat aus und dann das Eisenchlorid.

Erdalkalinitrate sind bei sehr niedrigen Temperaturen in die Oxide umwandelbar, so dass die Durchreaktion zum Hexaferrit bei Pulvertemperaturen um 900 °C nahezu vollständig erfolgt.

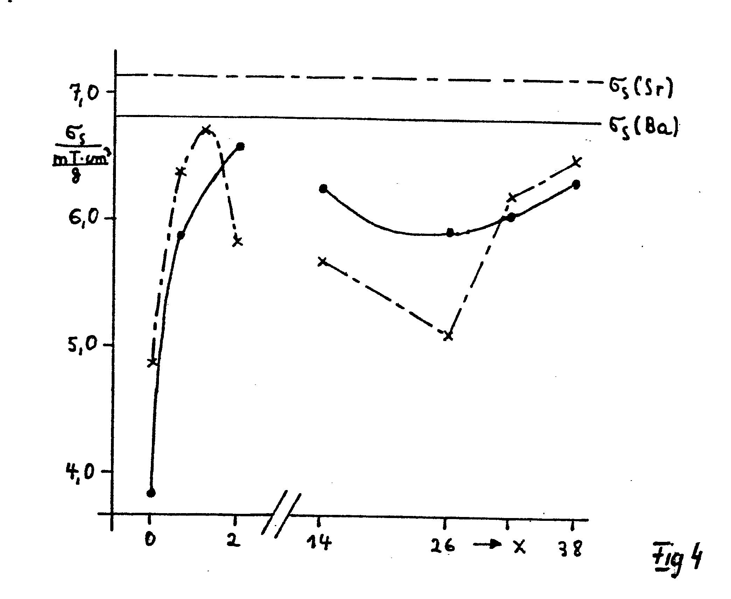

Dies ist aus Fig. 4 zu entnehmen, die die Sättigungsmagnetisierung verschiedener Hartferrite in Abhängigkeit vom Nitratgehalt der Lösung zeigt. Die Sättigungsmagnetisierung (= Durchreaktion) besitzt einen Maximalwert bei demjenigen Nitratgehalt, der der Zusammensetzung — Eisen als Chlorid, Ba als Nitrat — entspricht.

In Fig. 4 bezeichnet X die Nitratkonzentration in der Lösung ;

$X = 0$ : $MeCl_2 + 12\ FeCl_2$, $X = 2$ : $Me(NO_3)_2 + 12\ FeCl_2$, $X = 14$ : $Me(NO_3)_2 + 8\ FeCl_2 + 4\ Fe(NO_3)_3$, $X = 26$ : $Me(NO_3)_2 + 4\ FeCl_2 + 8\ Fe(NO_3)_3$, $X = 38$ : $Me(NO_3)_3 + 12\ Fe(NO_3)_3$.

Beispiel

Eine 0,05 molare wässrige Lösung (bezogen auf das Endprodukt $SrO \cdot 5,5\ Fe_2O_3$) von $FeCl_2$ und $Sr(NO_3)_2$ wird mit Hilfe einer pneumatischen Zweistoffdüse unter Verwendung von Pressluft bei einem Flüssigkeitsdurchsatz von 8,9 l/h und einem Luftdurchsatz von 7,6 m³/h in ein heisses Reaktionsrohr mit einer Wandtemperatur von 1 260 °C, einer beheizten Länge von 1,60 m und einem Innendurchmesser von 28 cm eingesprüht, das Pulver in einem Zyklon abgeschieden und die Lösungsmitteldämpfe entfernt. Die Pulvertemperatur betrug maximal 900 °C.

Das Pulver weist eine Sättigungsmagnetisierung von 6,62 mT · cm³/g und eine Koerzitivfeldstärke von 428 kA/m auf.

**Ansprüche**

1. Verfahren zur Herstellung von Hartferritpulver der Zusammensetzung $BaO \cdot 6\ Fe_2O_3$, das aus leicht in Primärkörner zerlegbaren Partikeln im Grössenbereich von 1-10 μm besteht, die sich zumindest zu 85 % aus Primärkörnern mit hartmagnetischer hexagonaler Gitterstruktur zusammensetzen und deren Abmessungen ≤ 0,5 μm sind, dadurch gekennzeichnet, dass eine 0,05 bis 0,3 molare wässrige Lösung bezogen auf das Endprodukt $BaFe_{12}O_{19}$, bei der Eisen in der Form von Eisen(II)-chlorid und Barium in der Form des Nitrates vorhanden ist, in ein Reaktionsgefäss eingesprüht wird, wobei die Tröpfchengrösse < 30 μm ist und die Partikel 2 bis 10 Sekunden einer Temperatur von 700 °C bis 900 °C ausgesetzt sind.

2. Verfahren zur Herstellung von Hartferritpulver der Zusammensetzung SrO · 6 Fe₂O₃, das aus leicht in Primärkörner zerlegbaren Partikeln im Grössenbereich von 1-10 μm besteht, die sich zumindest zu 85 % aus Primärkörnern mit hartmagnetischer hexagonaler Gitterstruktur zusammensetzen und deren Abmessungen ≤ 0,5 μm sind, dadurch gekennzeichnet, dass eine 0,05 bis 0,3 molare wässrige Lösung bezogen auf das Endprodukt SrFe₁₂O₁₉, bei der Eisen in der Form von Eisen(II)-chlorid und Strontium in der Form des Nitrates vorhanden ist, in ein Reaktionsgefäss eingesprüht wird, wobei die Tröpfchengrösse < 30 μm ist und die Partikel 2 bis 10 Sekunden einer Temperatur von 700 °C bis 900 °C ausgesetzt sind.

3. Verfahren nach Ansprüchen 1 und 2, dadurch gekennzeichnet, dass Hilfsstoffe wie Sinterhilfsmittel oder Mittel zur Gefügeverfeinerung der Lösung zugegeben werden (z.B. SiO₂, As₂O Bi₂O₃, TiO₂ oder Al₂O₃) in Form löslicher Salze.

4. Verfahren nach Ansprüchen 1 bis 3, dadurch gekennzeichnet, dass die Hilfsmittel in Form einer Suspension zugegeben werden.

5. Verfahren nach Ansprüchen 1 bis 4, dadurch gekennzeichnet, dass die Hilfsmittel in kolloidaler Form zugegeben werden.

6. Verfahren nach Ansprüchen 1 bis 5, dadurch gekennzeichnet, dass die Zerstäubung der Lösung durch Ein- oder Zweistoffdüsen erfolgt.

7. Verfahren nach Ansprüchen 1 bis 6, dadurch gekennzeichnet, dass die Zerstäubung der Lösung zur Erzielung eines eng begrenzten Tropfengrössenspektrums und damit einer eng begrenzten Fraktion der entstehenden Pulverteilchen mittels Ultraschall erfolgt.

8. Verfahren nach Anspruch 7, dadurch gekennzeichnet, dass die Ultraschallzerstäubung mittels eines piezoelektrischen Schwingers erfolgt.

## Claims

1. A process for preparing a hard ferrite powder with the composition BaO · 6 Fe₂O₃, said powder being composed of particles in the size range of about 1 to 10 μm which can be easily separated into primary grains, which contain at least about 85 % of primary grains with a hard magnetic hexagonal lattice structure and of which the size is less than, or equal to, 0.5 micron, which comprises spraying a 0.05 to 0.3 molar aqueous solution of iron II chloride and barium-nitrate, based upon the end product BaFe₁₂O₁₉, into a reaction vessel, the droplet size of said spray being < 30 μm and said particles having a dwell time of about 2-10 seconds at a temperature of about 700 to 900 °C.

2. A process for preparing a hard ferrite powder with the composition S₀O · 6 Fe₂O₃, said powder being composed of particles in the size range of about 1 to 10 microns which can be easily separated into primary grains, which contain at least about 85 % of primary grains with a hard magnetic hexagonal lattice structure and of which the size is less than, or equal to, 0.5 μm, which comprises spraying a 0,05 to 0,3 molar aqueous solution of iron II chloride and strontiumnitrate, based upon the end product SrFe₁₂O₁₉, into a reaction vessel, the droplet size of said spray being < 30 μm and said particles having a dwell time of about 2-10 seconds at a temperature of about 700 to 900 °C.

3. A process according to claims 1 and 2, including adding auxiliary substances such as sintering aids or grain size reducers in the form of soluble salts to the solution (i.e. SiO₂, As₂O₃, Bi₂O₃, TiO₂, and Al₂O₃).

4. A process according to claims 1 to 3, including adding the auxiliary substances in the form of a suspension.

5. A process according to claims 1 to 4, including adding the auxiliary substances in colloidal form.

6. A process according to claims 1 to 5, including effecting atomization of the solution by means of single material or two-material nozzles.

7. A process according to claims 1 to 6, including effecting atomization of the solution by ultrasonic for the purpose of obtaining a narrowly bounded spectrum of droplet size and hence a narrowly bounded fraction of the resulting powder particles.

8. A process according to claim 7 in which the ultrasonic atomization is implemented by a piezoelectric oscillator.

## Revendications

1. Procédé de fabrication de poudre de ferrite dur ayant pour formule BaO · 6 Fe₂O₃, constituée par des particules pouvant être aisément réduites en grains élémentaires, la grosseur des particules allant de 1 à 10 μm et ces particules étant elles-mêmes constituées, dans une proportion d'au moins 85 %, par des grains élémentaires ayant une structure réticulée hexagonale magnétiquement dure et dont les dimensions sont inférieures ou égales à 0,5 μm, caractérisé en ce qu'une solution aqueuse 0,05 à 0,3 molaire par rapport au produit final BaFe₁₂O₁₉, dans laquelle le fer est présent sous forme de chlorure ferreux et le baryum sous forme de nitrate, est pulvérisée dans un réacteur, la grosseur des gouttelettes étant inférieure à 30 μm et les particules étant exposées pendant 2 à 10 secondes à une température de 700 à 900 °C.

2. Procédé de fabrication de poudre de ferrite dur ayant pour formule SrO · 6 Fe₂O₃, constituée par des particules pouvant être aisément réduites en grains élémentaires, la grosseur des particules allant de 1 à 10 μm et ces particules étant elles-mêmes constituées, dans une proportion d'au moins 85 %, par des grains élémentaires ayant une structure réticulée hexagonale magnétiquement dure et dont les dimensions sont inférieures ou égales à 0,5 μm, caractérisé en ce qu'une solution aqueuse 0,05 à 0,3 molaire par rapport au produit final SrFe$_{12}$O$_{19}$, dans laquelle le fer est présent sous forme de chlorure ferreux et le strontium sous forme de nitrate, est pulvérisée dans un réacteur, la grosseur des gouttelettes étant inférieure à 30 μm et les particules étant exposées pendant 2 à 10 secondes à une température de 700 à 900 °C.

3. Procédé selon les revendications 1 et 2, caractérisé en ce qu'on ajoute des matières auxiliaires telles que des adjuvants de frittage ou des produits affinant la texture de la solution (par exemple : SiO$_2$, As$_2$O$_3$, Bi$_2$O$_3$, TiO$_2$ ou Al$_2$O$_3$), sous la forme de sels solubles.

4. Procédé selon les revendications 1 à 3, caractérisé en ce que les adjuvants sont ajoutés sous la forme d'une suspension.

5. Procédé selon les revendications 1 à 4, caractérisé en ce que les adjuvants sont ajoutés sous forme colloïdale.

6. Procédé selon les revendications 1 à 5, caractérisé en ce que la pulvérisation de la solution se fait avec des buses à un ou deux produits.

7. Procédé selon les revendications 1 à 6, caractérisé en ce que, pour obtenir une gamme de grosseurs de gouttelettes étroitement limitée, et donc une fraction étroitement limitée des particules qui se forment, on réalise la pulvérisation de la solution au moyen d'ultrasons.

8. Procédé selon la revendication 7, caractérisé en ce que la pulvérisation par les ultrasons se fait au moyen d'un oscillateur piézoélectrique.

Oxide mischen

I 1 μm

Brennen
(Diffusion)

Brechen/Mahlen

_Fig.1_

## Reaktions-Sprühtrocknung

Lösungen mischen

4

2

Sprühkalzinieren

800°C

1 µm

- Homogene Verteilung der Elemente im atomaren Bereich

- Hohe Sinteraktivität

*Fig. 2*

Ba - Ferritpulver - Herstellung

Konventionell
-------------

Reaktions-Sprühtrocknung
------------------------

```
┌─────────────────┐                    ┌─────────────────┐
│ FeCl₂ - Lösung  │                    │ FeCl₂ - Lösung  │
└─────────────────┘                    └─────────────────┘
         │                                      │        ┌──────────────┐
         ▼                                      │        │   Ba CO₃     │
┌─────────────────┐                             │        │   -Lösung    │
│   Sprührösten   │                             │        └──────────────┘
└─────────────────┘                             │              │
    │          │                                ▼              ▼
    ▼          ▼                         ┌─────────────────┐
┌────────┐  ┌──────┐                     │    Mischen      │
│ Fe₂O₃- │  │ H C l│                     │  (als Lösung)   │
│ Pulver │  └──────┘                     └─────────────────┘
└────────┘                                        │
    │       ┌──────────┐                          ▼
    │       │ Ba CO₃ - │              ┌─────────────────────┐
    │       │  Pulver  │              │   Sprühcalcinieren   │
    │       └──────────┘              └─────────────────────┘
    │            │                         │            │
    ▼            ▼                         ▼            ▼
┌─────────────────┐              ┌────────────┐  ┌────────┐
│    Mischen      │              │ Ba - Ferrit│  │ H C l  │
│  (als Pulver)   │              └────────────┘  └────────┘
└─────────────────┘
         │
         ▼
┌─────────────────┐
│    Brennen      │
└─────────────────┘
         │
         ▼
┌─────────────────┐
│ Grobzerkleinern │
└─────────────────┘
         │
         ▼
┌─────────────────┐
│  Feinstmahlen   │
└─────────────────┘
         │
         ▼
┌─────────────────┐
│   Ba - Ferrit   │
└─────────────────┘
```

*Fig. 3.*

Fig 4